Europäisches Patentamt

European Patent Office

Office européen des brevets

(19)

(11) Veröffentlichungsnummer: **0 216 790**
**B1**

(12) EUROPÄISCHE PATENTSCHRIFT

(45) Veröffentlichungstag der Patentschrift: **31.10.90**

(51) Int. Cl.⁵: **H 04 N 5/60**

(21) Anmeldenummer: **86900773.2**

(22) Anmeldetag: **03.02.86**

(86) Internationale Anmeldenummer:
**PCT/EP86/00056**

(87) Internationale Veröffentlichungsnummer:
**WO 86/05346 12.09.86 Gazette 86/20**

(54) **EMPFANGSGERÄT ZUM EMPFANG VON MITTELS KABEL ÜBERTRAGENEN FERNSEHSENDUNGEN MIT EINER TORSCHALTUNG.**

(30) Priorität: **09.03.85 DE 3508528**

(43) Veröffentlichungstag der Anmeldung:
**08.04.87 Patentblatt 87/15**

(45) Bekanntmachung des Hinweises auf die Patenterteilung:
**31.10.90 Patentblatt 90/44**

(84) Benannte Vertragsstaaten:
**AT BE CH DE FR GB IT LI LU NL SE**

(56) Entgegenhaltungen:
**DE-A-2 001 524**
**DE-A-3 106 864**
**FR-A-2 305 903**
**FR-A-2 384 400**
**US-A-4 313 137**

**International Broadcasting Convention, 9-13. Sept. 1968, Conference Publication, Nr. 46, Part 1, London (GB); D.Mercy:"A low noise vertical and horizontal aperture corrector", Seiten 3.16.1 - 3.16.4**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **HARTMANN, Uwe**
**Tallardstrasse 15**
**D-7730 Villingen-Schwenningen (DE)**
Erfinder: **MAI, Udo**
**Mühleschweg 2**
**D-7730 VS-Tannheim (DE)**
Erfinder: **OHNEMUS, Fritz**
**An der Hammerhalde 13**
**D-7730 Villingen-Schwenningen (DE)**

Courier Press, Leamington Spa, England.

**Beschreibung**

Die Erfindung geht aus von einem Empfangsgerät zum Empfang von mittels Kabel übertragenen Fernsehsendungen mit einer Torschaltung zur Vermeidung des Empfangs fremder Funkdienste.

Bekanntlich sind bei den Frequenzen für das Kabelfernsehen auch Kanäle vorgesehen, die bei drahtloser Ausstrahlung fremden Funkdiensten zugeordnet sind, wie z.B. Polizeifunk usw.

Es ist bekannt, derartige Funkdienste dadurch unhörbar zu machen, daß bei Empfang eines Sendesignals, welches nicht der Fernsehnorm entspricht, der Tonkanal stummgesteuert wird. Dies geschieht in bekannter Weise dadurch, daß nur bei Feststellung von Koinzidenz der empfangenen Zeilensynchronimpulse und der vom Empfangsgerät erzeugten zeilenfrequenten Impulse der Tonkanal durchgeschaltet wird. Dadurch wird vermieden, daß die fremden Funkdienste hörbar sind (DE-PS 25 13 344). Diese Schaltung arbeitet zuverlässig, solange ein Empfangsgerät nur für HF-Empfangssignale ausgelegt ist. Es gibt jedoch Geräte, die nicht ausschließlich dem Empfang von HF-Signalen dienen. Durch einen besonderen Eingang (SCART-Buchse) am Fernsehempfangsgerät ist es möglich, z.B. Spiele, Computer, Videotuner, Videorecorder anzuschliessen, deren FBAS-Signal über einen Schalter an die Video- und Synchronisierstufen mit Phasenvergleich und Koinzidenz anschaltbar sind. Diese Peripheriegeräte stellen Pseudofernsehsender dar, auf die die Tonstummschaltung reagiert, d.h. bei Vorhandensein eines Signals aus dem angeschlossenen Gerät wird der Tonkanal durchgeschaltet, auch dann, wenn der Fernsehempfänger auf die Frequenz eines fremden Funkdienstes abgestimmt ist. So kann man z.B. über einen Ausgangskontakt für den Ton der SCART-Buchse z.B. über einen Kopfhörer den fremden Funkdienst hörbar machen. Dies entspricht jedoch nicht den Vorschriften, die besagen, daß in jedem Fall der Ton eines solchen Dienstes unhörbar bleiben muß.

Der Erfindung liegt die Aufgabe zugrunde, auch für den Fall des Anschlusses von Peripheriegeräten auf einfache Weise den genannten Vorschriften zu genügen. Diese Aufgabe wird durch die in den Patentansprüchen gekennzeichnete Anordnung gelöst.

Nachstehend wird die Erfindung am Ausführungsbeispiel mit Hilfe der Zeichnung erläutert.

Figur 1 zeigt die Anordnung in einem Blockschaltbild;

Figur 2 zeigt den Teil des Blockschaltbildes nach Figur 1 zur Erzeugung des Stummsteuersignals.

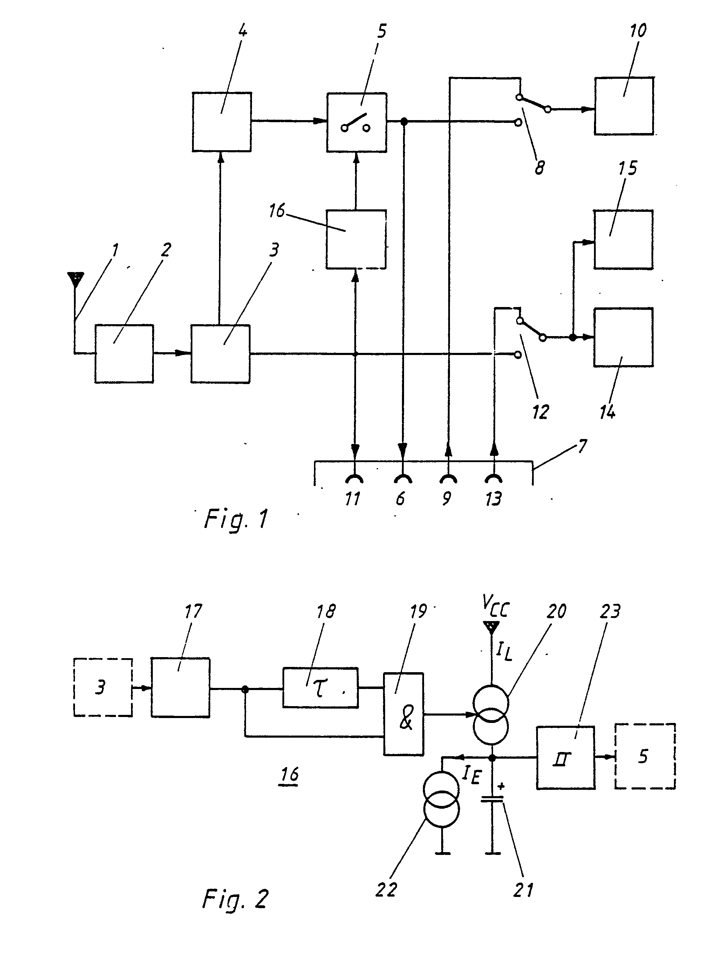

Ein von der Antenne 1 empfangenes HF-Signal gelangt an den Tuner 2 und von dort an die ZF-Stufe 3, von welcher der Tonkanal und der Videokanal abzweigen. Über eine Ton-ZF-Stufe 4 gelangt das Tonsignal über eine Torschaltung 5 an einen nach außen führenden Kontakt 6 einer Buchsenleiste 7 für den Anschluß z.B. eines Kopfhörers sowie an einen Kontakt eines Umschalters 8, dessen anderer Kontakt mit einem Eingangsanschluß 9 verbunden ist, von welchem die Tonsignale an die Tonstufe 10 des Empfängers umschaltbar sind. Von der ZF-Stufe 3 gelangt das Videosignal an eine nach außen führenden Kontakt 11 und an einen Kontakt eines weiteren Umschalters 12, dessen anderer Kontakt mit einem Eingangsanschluß 13 verbunden ist. Die Eingangs- und Ausgangsanschlüsse 9, 13 und 6, 11 dienen zur Verbindung des Empfangsgerätes mit den Peripheriegeräten. Der Umschalter 12 ist mit den Videosignalstufen 14 und den für die Ablenkung der Elektronenstrahlen der Bildwiedergaberöhre zuständigen Schaltungen 15 verbunden. Das Steuersignal zur Beeinflussung der Torschaltung 5 wird aus dem ZF-Signal gewonnen und in einer Stufe 16 verarbeitet, welche in Figur 2 ausführlich beschrieben wird.

Das FBAS-Signal ist an eine Impulstrennstufe 17 geschaltet. Der Ausgang dieser Impulstrennstufe ist zum einen über eine Verzögerungsschaltung 18 und zum anderen direkt an eine Koinzidenzschaltung 19 gelegt. Das Ausgangssignal dieser Koinzidenzschaltung 19 schaltet eine Konstantstromquelle 20 ein, welche einen Kondensator 21 auflädt, solange zeilenfrequente Impulse an die Schaltung gelangen. Nur bei einem Fernsehsignal wird die Koinzidenzschaltung 19 aktiviert, wodurch der Kondensator 21 geladen werden kann. Eine zweite Konstantstromquelle 22 ist vorgesehen, die den Kondensator 21 dauernd entlädt. Bei geeignetem Verhältnis der Ströme der beiden Stromquellen 20 und 21 kann erreicht werden, daß der Ladestrom $I_L$ bei Empfang von Fernsehsignalen größer ist, als der Entladestrom $I_E$. Ein nachgeschalteter Schwellwert-Schalter 23 sorgt für eindeutiges Schalten und damit für eine eindeutige Erzeugung des Mute-Signals.

Die Schaltung nach Figur 2 ist besonders geeignet für den Aufbau in integrierter Schaltungstechnik.

Für die Verzögerungsschaltung 18 kann z.B. eine PAL-Verzögerungsleitung verwendet werden, die die Zeilensynchronimpulse um genau einer Zeilenperiode verzögert Auch kann die Verzögerungsschaltung 18 aus einem digital arbeitenden Schieberegister bestehen, wobei die Verzögerungszeit umschaltbar gemacht werden kann z.B. auf die Dauer eines Vielfachen der Periodendauer einer Zeilenlänge.

Bezugszeichenliste
    1 Antenne
    2 Tuner
    3 ZF-Stufe
    4 Ton-ZF-Stufe
    5 Torschaltung
    6 Kontakt
    7 Buchsenleiste
    8 Umschalter
    9 Eingangsanschluss
    10 Tonstufe
    11 Kontakt
    12 Umschalter

13 Eingangsanschluss
14 Videosignalstufen
15 Ablenkschaltungen
16 Steuersignalstufe
17 Impulstrennstufe
18 Verzögerungsschaltung
19 Koinzidenzschaltung
20 Konstantstromquelle
21 Kondensator
22 Konstantstromquelle
23 Schwellwert-Schalter

**Patentansprüche**

1. Empfangsgerät zum Empfang von mittels Kabel übertragenen Fernsehsendungen mit einer mit mehreren Buchsen für Ein- und Ausgangssignale versehenen Steckerleiste in Form einer SCART-Buchse (7) zum Anschluß von peripheren Geräten, mit einer Torschaltung (5) zur Vermeidung des Empfangs fremder Funkdienste, wobei die Torschaltung vor dem Tonausgang der SCART-Buchse angeordnet ist, sowie mit einer Impulsabtrennstufe (17) zur Ausfilterung der horizontalfrequenten Synchronimpulse, dadurch gekennzeichnet, daß die von der Impulsabtrennstufe (17) abgeleiteten horizontalfrequenten Impulse über eine Verzögerungseinrichtung (18) an einen ersten Eingang einer Koinzidenzstufe (19) gelegt sind, an deren zweiten Eingang die unverzögerten horizontalfrequenten Impulse gelegt sind, wobei das Ausgangssignal der Koinzidenzstufe (19) eine erste Konstantstromquelle (20) zur Aufladung eines Kondensators (21) einschaltet, und daß eine zweite Konstantstromquelle (22) diesen Kondensator (21) dauernd entlädt, und daß der Aufladestrom größer ist als der Entladestrom und daß die am Kondensator (21) entstehende Spannung über einen Schwellwertschalter (23) als Signal zum Entriegeln der Torschaltung (5) dient.

2. Empfangsgerät nach Anspruch 1, dadurch gekennzeichnet, daß die Verzögerungseinrichtung (18) aus einer PAL-Verzögerungsleitung mit Modulator und Demodulator besteht.

3. Empfangsgerät nach Anspruch 1, dadurch gekennzeichnet, daß die Verzögerungsschaltung (18) aus einem digitalen Schieberegister besteht.

4. Empfangsgerät nach Anspruch 1, dadurch gekennzeichnet, daß die Verzögerungzeit der Verzögerungseinrichtung (18) einer Zeilenperiode entspricht.

5. Empfangsgerät nach Anspruch 1, dadurch gekennzeichnet, daß die Verzögerungzeit der Verzögerunseinrichtung (18) umschaltbar ist.

**Revendications**

1. Appareil pour la réception des émissions de télévision transmises par câble comportant un connecteur sous forme d'une prise péritel (7) munie de plusieurs douilles pour des signaux d'entrée et de sortie pour le branchement d'appareils périphériques, comprenant un circuit de porte (5) pour interdire la réception d'autres radiocommunications, le circuit de porte étant disposé en amont de la sortie audio de la prise péritel ainsi qu'un étage séparateur d'interférences (17) pour filtrer les impulsions de synchronisation de fréquence de lignes horizontales, caractérisé en ce que les impulsions de fréquence de lignes horizontales délivrées par l'étage séparateur d'interférences (17) sont appliquées par un circuit de retard (18) à une première entrée d'un étage de coïncidence (19), dont la deuxième entrée reçoit les impulsions de fréquence de lignes horizontales à action instantanée, le signal de sortie de l'étage de coïncidence (19) connectant une première source de courant constant (20) pour charger un condensateur (21), et qu'une deuxième source de courant constant (22) décharge constinuellement ce condensateur (21), et que le courant de charge est supérieur au courant de décharge, et que la tenslon apparaissant au condensateur (21) est un signal servant à déverrouiller le circuit de porte (5) par un circuit à seuil (23).

2. Récepteur selon la revendication 1, caractérisé en ce que le circuit de retard (18) est une ligne de retard PAL avec un modulateur et un démodulateur.

3. Récepteur selon la revendication 1, caractérisé en ce que le circuit de retard (18) est un registre à décalages numérique.

4. Récepteur selon la revendication 1, caractérisé en ce que la durée de retard du circuit de retard (18) correspond à une période de ligne.

5. Récepteur selon la revendication 1, caractérisé en ce que la durée de retard du circuit de retard (18) est commutable.

**Claims**

1. A receiving set for the reception of television transmissions transmitted by cable, having a plug board in the form of a SCART socket (7) for the connection of peripheral equipment, which plug board is provided with a plurality of sockets for input and output signals, having a gate circuit (5) to avoid the reception of extraneous radio services, the gate circuit being disposed before the sound output of the SCART socket, and having a pulse separating stage (17) to filter out the horizontal-frequency sync pulses, characterised in that the horizontal-frequency pulses derived from the pulse separating stage (17) are applied, via a delay device (18), to a first input of a coincidence stage (19) to the second input of which the undelayed horizontal-frequency pulses are applied, and the output signal of the coincidence stage (19) switches on a first constant current source (20) to charge a capacitor (21), and that a second constant current source (22) continuously discharges this capacitor (21), and that the charging current is greater than the discharging current, and that the voltage appearing at the capacitor (21) serves, through a threshold switch (23), as a signal for the unlocking of the gate circuit (5).

2. A receiving set according to Claim 1, characterised in that the delay device (18) consists of a PAL delay line with modulator and demodulator.

3. A receiving set according to Claim 1, characterised in that the delay circuit (18) consists of a digital shift register.

4. A receiving set according to Claim 1, characterised in that the delay time of the delay device (18) corresponds to a line period.

5. A receiving set according to Claim 1, characterised in that the delay time of the delay device (18) can be switched over.

Fig. 1

Fig. 2